# NEUE EUROPÄISCHE PATENTSCHRIFT

(11) **EP 2 220 753 B2**
(45) Veröffentlichungstag und Bekanntmachung des Hinweises auf die Entscheidung über den Einspruch: **04.03.2015**
(45) Hinweis auf die Patenterteilung: 10.08.2011
(21) Anmeldenummer: 08858131.9
(22) Anmeldetag: 15.10.2008
(51) Int. Cl.: H02M 1/44

(54) **ELEKTROWERKZEUG**
ELECTRIC TOOL
OUTIL ÉLECTRIQUE

(30) Priorität: 06.12.2007 DE 102007055718
(43) Veröffentlichungstag der Anmeldung: 25.08.2010
(73) Patentinhaber: Robert Bosch GmbH, 70442 Stuttgart (DE)
(72) Erfinder: BOSCH, Volker, 70771 Echterdingen (DE)
(86) Internationale Anmeldenummer: PCT/EP2008/063855
(87) Internationale Veröffentlichungsnummer: WO 2009/071378

(56) Entgegenhaltungen:
- WO-A-01/69755
- US-A- 5 838 877
- US-A1- 2007 242 489
- US-B1- 6 204 649
- F. MIHALIC AND D. KOS: "Conductive EMI Reduction in DC-DC Converter by Using the Randomized PWM" IEEE ISIE, 20. Juni 2005 (2005-06-20), Seiten 809-814, XP002517719 Dubrovnik, Croatia
- FRANC MIHALIC AND DEJAN KOS: "Randomized PWM for conductive EMI reduction in DC-DC choppers" HAIT JOURNAL OF SCIENCE AND ENGINEERING B, Bd. 2, Nr. 5-6, 2005, Seiten 594-608, XP002517720 Maribor, Slovenia

## Beschreibung

### Beschreibung

### Stand der Technik

Die vorliegende Erfindung betrifft ein handgeführtes Elektrowerkzeug gemäss dem Oberbegriff des Patentanspruchs 1.

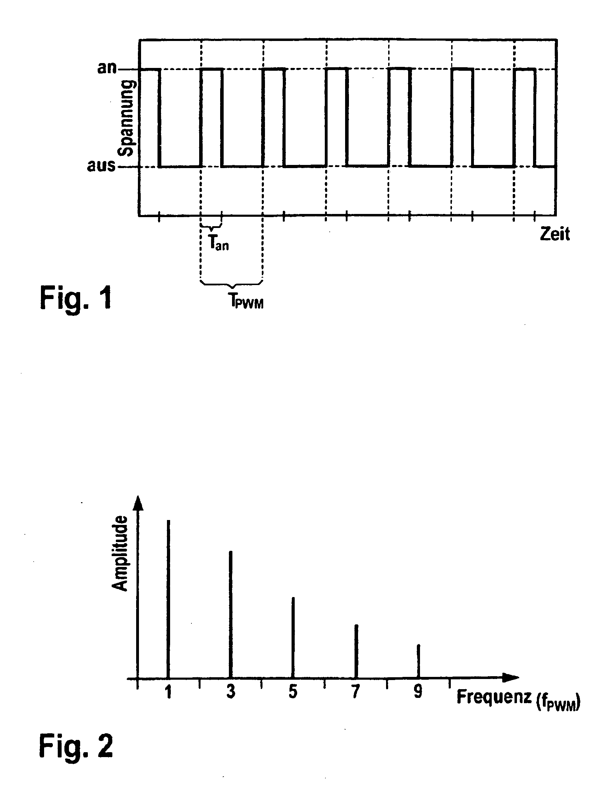

Handgeführte Elektrowerkzeuge, beispielsweise Bohrmaschinen, Akkuschrauber, Stichsägen, Winkelschleifer oder elektrische Heckenscheren, die aus Akkumulatoren oder Batterien oder über ein Netzkabel gespeist werden, sind allgemein bekannt. Derartige Elektrowerkzeuge weisen Elektromotoren auf, die nach dem Stand der Technik mit einer pulsweitenmodulierten Spannung oder, im Fall netzgespeister Werkzeuge, durch Phasenanschnittsteuerung betrieben werden. Wie in Figur 1 schematisch dargestellt, wechselt eine pulsweitenmodulierte Spannung periodisch zwischen einem hohen und einem niedrigen Spannungswert. Während der hohe Spannungswert anliegt, ist der Motor eingeschaltet. Während der niedrige Spannungswert anliegt, ist der Motor abgeschaltet. Das Verhältnis der Einschaltdauer Tₐₙ während einer Periode der pulsweitenmodulierten Spannung zur gesamten Dauer *T*_{PWM} einer Periode der pulsweitenmodulierten Spannung wird als Tastverhältnis bezeichnet und bestimmt die effektiv an den Motor abgegebene elektrische Leistung.
Ein Problem beim Einsatz des Verfahrens der Pulsweitenmodulation ist die Bildung und Abstrahlung von Oberschwingungen. Bedingt durch das periodische Umschalten zwischen einem hohen und einem niedrigen Spannungsniveau und den daraus resultierenden Stromänderungen werden Oberschwingungen ausgebildet, deren Frequenz ein ungeradzahliges Vielfaches der Modulationsfrequenz f_{PWM} der Pulsweitenmodulation beträgt (Fig. 2). Diese Oberschwingungen werden als EMV-Störungen abgestrahlt. Übermäßig starke EMV-Störungen können andere elektrische Geräte, beispielsweise Kommunikationsanlagen, negativ beeinflussen.

Aus der WO 01/69755 A1 ist ein handgeführtes Elektrowerkzeug mit einem Motor und einem Pulsweitenmodulator zur Erzeugung eines pulsweitenmodulierten Signals zum Betreiben des Motors bekannt. Aus F. Mihalic and D. Kos "Conductive EMI Reduction in DC-DC Converter by Using the Randomized PWM" (IEEE ISIE, 20. Juni 2005, Seiten 809-814, XP002517719 Dubrovnik, Croatia) ist ferner bekannt, eine Einrichtung zur Reduzierung der durch ein Elektrowerkzeug abgestrahlten EMV-Störungen vorzusehen.

### Offenbarung der Erfindung

Aufgabe der vorliegenden Erfindung ist es, eine Vorrichtung anzugeben, durch die die Amplituden der von einem handgeführten Elektrowerkzeug abgestrahlten EMV-Störungen weiter reduziert werden.

Die der Erfindung zugrunde liegende Aufgabe wird durch ein Elektrowerkzeug mit den Merkmalen des Anspruchs 1 gelöst. Das handgeführte Elektrowerkzeug weist einen Motor und einen

Pulsweitenmodulator zur Erzeugung eines pulsweitenmodulierten Signals zum Betreiben des Motors auf. Es ist eine Einrichtung zur Reduzierung der durch das Elektrowerkzeug abgestrahlten EMV-Störungen vorgesehen, die eine Einrichtung zum Modulieren der Trägerfrequenz des pulsweitenmodulierten Signals mit einem Rausch- oder Pseudozufallssignal aufweist. Mittels eines Taktgenerators wird ein Taktsignal erzeugt, wobei das pulsweitenmodulierte Signal aus dem Taktsignal abgeleitet wird. Weiterhin sind ein Zählerregister zur Zählung der abgelaufenen Taktperioden des Taktsignals, ein Umklappwertregister und ein Überlaufwertregister vorgesehen, wobei der Pulsweitenmodulator vorgesehen ist,
- ein erstes Signalniveau auszugeben, falls der Wert des Zählerregisters unter dem Umklappwert liegt,
- ein zweites Signalniveau auszugeben, falls der Wert des Zählers gleich oder größer dem Umklappwert ist,
- den Zähler auf einen Startwert zu setzen, falls der Wert des Zählers gleich dem Überlaufwert ist,
- Umklappwert und Überlaufwert auf zufällige neue Werte zu setzen, falls der Wert des Zählers gleich dem bisherigen Überlaufwert ist, wobei das Verhältnis des neuen Umklappwerts zum neuen Überlaufwert im Wesentlichen gleich dem Verhältnis des bisherigen Umklappwerts zum bisherigen Überlaufwert ist.

Erfindungsgemäß ist eine Einrichtung vorgesehen, um die zufälligen neuen Werte für Umklappwert und Überlaufwert durch Addition einer Zufallszahl zu fest vorgegebenen Werten zu ermitteln.

### Kurze Beschreibung der Zeichnungen

Figur 1 zeigt eine schematische Darstellung eines pulsweitenmodulierten Spannungssignals mit konstanter Trägerfrequenz;
Figur 2 zeigt eine schematische Darstellung eines abgestrahlten Spektrums eines pulsweitenmodulierten Signals mit konstanter Trägerfrequenz;
Figur 3 zeigt eine schematische Darstellung eines pulsweitenmodulierten Spannungssignals mit rauschmodulierter Trägerfrequenz;
Figur 4 zeigt eine schematische Darstellung eines abgestrahlten Spektrums eines pulsweitenmodulierten Signals mit rauschmodulierter Trägerfrequenz;
Figur 5 zeigt eine schematische Darstellung eines handgeführten Elektrowerkzeugs;
Figur 6 zeigt eine schematische Darstellung einer Vorrichtung zur Erzeugung eines pulsweitenmodulierten Signals mit rauschmodulierter Trägerfrequenz in einem Elektrowerkzeug;
Figur 7 zeigt eine schematische Darstellung einer weiteren Vorrichtung zur Erzeugung eines pulsweitenmodulierten Signals mit rauschmodulierter Trägerfrequenz in einem Elektrowerkzeug;
Figur 8 zeigt eine schematische Darstellung einer weiteren Vorrichtung zur Erzeugung eines pulsweitenmodulierten Signals mit rauschmodulierter Trägerfrequenz in einem Elektrowerkzeug.

### Ausführungsformen der Erfindung

Figur 1 zeigt eine schematische Darstellung des Zeitverlaufs eines pulsweitenmodulierten Spannungssignals. Das pulsweitenmodulierte Spannungssignal wechselt periodisch zwischen einem hohen und einem niedrigen Spannungsniveau. Wird mit dem pulsweitenmodulierten Spannungssignal ein Motor eines Elektrowerkzeugs 100 betrieben, so bewirken die Spannungsunterschiede eine zeitliche Variation des durch den Motor fliessenden Stroms, die jedoch durch die Induktivität des Motors geglättet wird. Änderungen der Stromstärke bewirken eine Änderung des Drehmoments und damit der Drehzahl des Motors, die aber durch das Trägheitsmoment des Motors verzögert wird. Die beiden Spannungsniveaus wechseln einander mit einer Trägerfrequenz f_{PWM} ab. Das Tastverhältnis zwischen der Anschaltzeit *T*ₐₙ zur gesamten Periodendauer *T*_{PWM} beeinflusst die mittlere an den Motor des Elektrowerkzeugs 100 abgegebene Leistung. Bei hinreichend hoher Trägerfrequenz f_{PWM} stellt sich eine vom Tastverhältnis abhängige, zeitlich nahezu konstante Motordrehzahl ein.

Wegen der festen Trägerfrequenz *f*_{PWM} weist das Spektrum des pulsweitenmodulierten Spannungssignals in Figur 1 eine Anzahl diskreter Spektrallinien bei ungeradzahligen Vielfachen der Trägerfrequenz *f*_{PWM} auf. Dieses Spektrum ist schematisch in Figur 2 dargestellt. Die hochfrequenten Signalanteile des Spektrums des pulsweitenmodulierten Signals und des resultierenden Motorstroms werden als EMV-Störungen abgestrahlt. Die Amplituden der einzelnen diskreten Spektrallinien können dabei gegenwärtig oder zukünftig zulässige Grenzwerte überschreiten.

Eine Möglichkeit zur Reduzierung von EMV-Störungen besteht im Einsatz von Filtergliedern wie Kondensatoren, Drosseln und Kombinationen dieser Bauelemente. Die Verwendung zusätzlicher Bauteile erhöht allerdings die Grösse des Elektrowerkzeugs 100 und den zu dessen Herstellung erforderlichen Montageaufwand, was zusätzliche Kosten verursacht.

Eine andere Möglichkeit zur Reduzierung der durch die Pulsweitenmodulation emittierten Störungen besteht in einem Abflachen oder Verschleifen der Flanken des pulsweitenmodulierten Signals. Dadurch wird der Beitrag der hochfrequenten Signalanteile, also der Oberschwingungen, reduziert. Ein Abflachen der Signalflanken kann beispielsweise dadurch erreicht werden, dass der das pulsweitenmodulierte Signal erzeugende Treiberbaustein gezielt langsamer ausgeführt wird, beispielsweise durch Einfügen eines Serienwiderstandes. Allerdings wird durch diese Massnahme auch die Schaltzeit eines dem Treiberbaustein nachgeordneten Leistungsschalters verlängert, was zu einer Erhöhung der Schaltverluste führt. Dadurch steigt der Energiebedarf eines Elektrowerkzeugs 100 an. Dies kann die Laufzeit eines batterie- oder akkubetriebenen Elektrowerkzeugs 100 negativ beeinflussen.

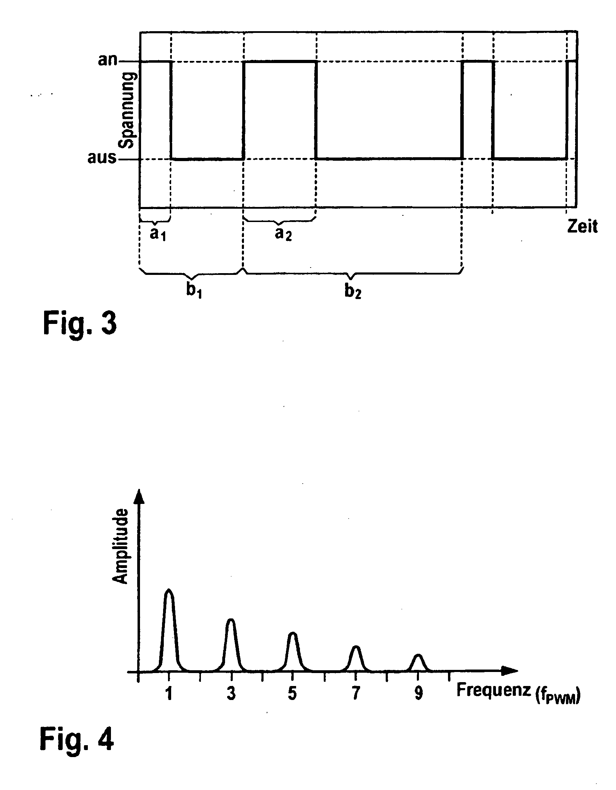

Eine weitere Möglichkeit zur Reduzierung der abgestrahlten EMV-Störungen besteht darin, die Amplituden der Oberschwingungen des pulsweitenmodulierten Signals zu reduzieren, indem die Trägerfrequenz des pulsweitenmodulierten Signals mit einem Rausch- oder Pseudozufallssignal moduliert wird. Dies ist schematisch in Figur 3 dargestellt. Figur 3 zeigt den zeitlichen Verlauf eines pulsweitenmodulierten Spannungssignals mit rauschmodulierter Trägerfrequenz. Die Spannung wechselt im zeitlichem Verlauf zwischen einem hohen und einem niedrigen Spannungsniveau. Die Periodendauer b₁, b₂ eines Zyklus aus hohem und niedrigem Spannungssignal ist einer zeitlich zufälligen Modulation unterworfen, die in Figur 3 übertrieben dargestellt ist. Das Tastverhältnis der Anschaltdauer a₁, a₂ zur Gesamtdauer eines Zyklus b₁, b₂ hingegen ist zeitlich konstant. Das Oberwellenspektrum eines solchen pulsweitenmodulierten Spannungssignals mit rauschmodulierter Trägerfrequenz ist schematisch in Figur 4 abgebildet. Anstelle diskreter Spektrallinien weist das Spektrum über endliche Frequenzintervalle um ungeradzahlige Vielfache der Trägerfrequenz *f*_{PWM} ausgedehnte Amplituden auf, deren Höhe gegenüber den Amplituden des Spektrums in Figur 2 reduziert ist. Ein mit einem pulsweitenmodulierten Spannungssignal mit rauschmodulierter Trägerfrequenz wie in Figur 3 betriebener Motor eines Elektrowerkzeugs 100 strahlt daher nur EMV-Störungen mit reduzierten Amplituden ab.

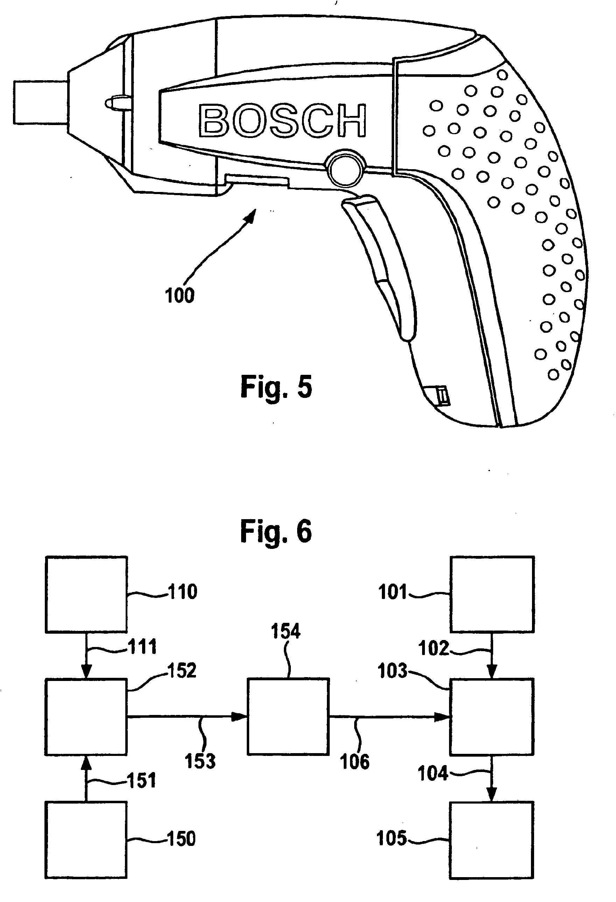

Figur 5 zeigt eine schematische Ansicht eines handgeführten Elektrowerkzeugs 100.
Figur 6 zeigt einen Ausschnitt eines Elektrowerkzeugs 100 in einer ersten Ausführungsform. Das Elektrowerkzeug 100 weist einen Taktgenerator 110 auf, der einen konstanten Zählertakt 111 erzeugt. Ein analoger Rauschgenerator 150 gibt ein analoges Zufallssignal 151 aus. Ein Taktmodulator 152 moduliert den konstanten Zählertakt 111 mit dem analogen Zufallssignal 151, um ein moduliertes Taktsignal 153 zu erzeugen. In einer bevorzugten Ausführungsform werden Taktgenerator 110 und Taktmodulator 152 in einer Baugruppe zusammengefasst. Das modulierte Taktsignal 153 speist einen Pulsweitenmodulator 154, der daraus einen pulsweitenmodulierten Spannungssollwert mit rauschmodulierter Trägerfrequenz 106 erzeugt. Der Pulsweitenmodulator 154 kann beispielsweise durch einen Mikrocontroller realisiert sein. Eine Spannungsquelle 101 liefert eine konstante Spannung 102. Die Spannungsquelle 101 kann beispielsweise ein in das Elektrowerkzeug 100 eingebauter Akkumulator oder eine in das Elektrowerkzeug 100 eingelegte Batterie sein. Ein Leistungsschalter 103 erzeugt aus der konstanten Spannung 102 und dem pulsweitenmodulierten Spannungssollwert mit rauschmodulierter Trägerfrequenz 106 eine Spannung 104, die die gleiche Pulsweitenmodulation mit rauschmodulierter Trägerfrequenz wie der pulsweitenmodulierte Spannungssollwert mit rauschmodulierter Trägerfrequenz 106 aufweist. Die pulsweitenmodulierte Spannung mit rauschweitenmodulierter Trägerfrequenz 104 speist einen Motor 105 des Elektrowerkzeugs 100. Die Drehgeschwindigkeit des Motors 105 wird durch das Tastverhältnis der durch den Pulsweitenmodulator 154 erzeugten Pulsweitenmodulation bestimmt. Dafür notwendige Baugruppen, wie Schalter und Sollwertgeber sind in Figur 6 der Übersichtlichkeit halber nicht dargestellt. Der Leistungsschalter 103 kann ein Halbleiterbauelement, beispielsweise ein MOSFET sein.

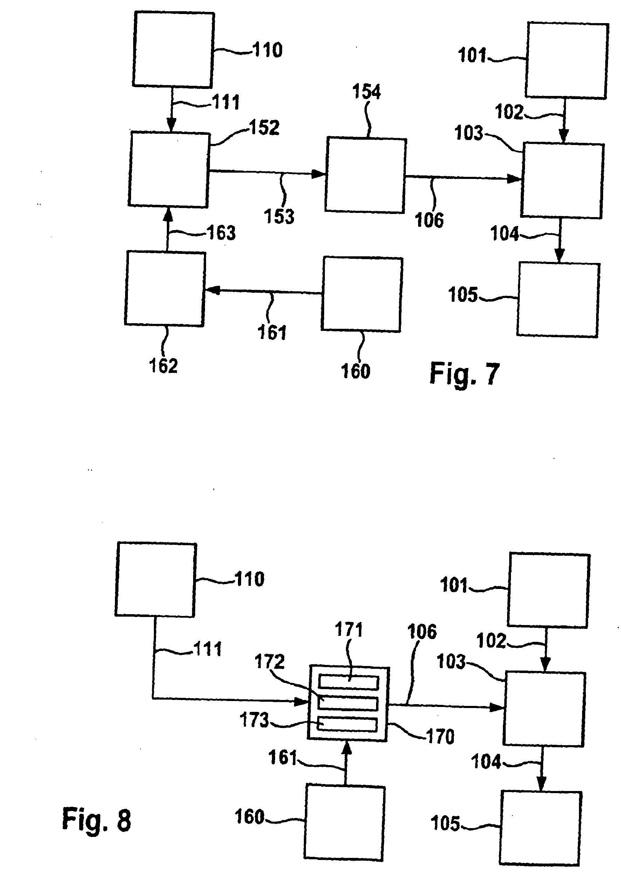

In Figur 7 ist ein Ausschnitt eines Elektrowerkzeugs 100 in einer zweiten Ausführungsform dargestellt. Das Elektrowerkzeug 100 weist einen Taktgenerator 110 auf, der einen konstanten Zählertakt 111 ausgibt. Ein digitaler Pseudozufallszahlengeber 160 gibt eine digitale Pseudozufallszahl 161 aus. Der digitale Pseudozufallszahlengeber 160 kann beispielsweise ein Mikrocontroller sein, der mittels eines geeigneten Algorithmus die digitale Pseudozufallszahl 161 erzeugt und bitweise seriell über einen Portpin ausgibt. Die digitale Pseudozufallszahl 161 wird über ein Glättungsglied 162 in ein analoges Pseudozufallssignal 163 umgewandelt. Das Glättungsglied 162 kann beispielsweise ein RC-Tiefpass sein. Ein Taktmodulator 152 moduliert den konstanten Zählertakt 111 mit dem analogen Pseudozufallssignal 163 und erzeugt daraus ein moduliertes Taktsignal 153. In einer bevorzugten Ausführungsform werden Taktgenerator 110 und Taktmodulator 152 in einer Baugruppe zusammengefasst. Das modulierte Taktsignal 153 speist einen Pufsweitenmodufator 154, der einen pulsweitenmodulierten Spannungssollwert mit rauschmodulierter Trägerfrequenz 106 erzeugt. Eine in das Elektrowerkzeug 100 integrierte Spannungsquelle 101 gibt eine konstante Spannung 102 ab. Ein Leistungsschalter 103 erzeugt aus der konstanten Spannung 102 und dem pulsweitenmodulierten Spannungssollwert mit rauschmodulierter Trägerfrequenz 106 eine pulsweitenmodulierte Spannung mit rauschmodulierter Trägerfrequenz 104, die einen Motor 105 des Elektrowerkzeugs 100 antreibt.

In Figur 8 ist ein Ausschnitt eines erfindungsgemässen Elektrowerkzeugs 100 in einer weiteren Ausführungsform dargestellt. Das Elektrowerkzeug 100 weist einen Taktgenerator 110 auf, der einen konstanten Zählertakt 111 ausgibt. Ein digitaler Pseudozufallszahlengeber 160 erzeugt eine digitale Pseudozufallszahl 161. Ein Pulsweitenmodulator 170 erzeugt aus konstantem Zählertakt 111 und digitaler Pseudozufallszahl 161 nach einem erfindungsgemässen Verfahren einen pulsweitenmodulierten Spannungssollwert mit rauschmodulierter Trägerfrequenz 106. Der Pulsweitenmodulator 170 kann beispielsweise ein Mikrocontroller sein.

Der Pulsweitenmodulator 170 weist einen Zähler 171, einen festgelegten Umklappwert 172 und einen festgelegten Überlaufwert 173 auf. Der Zähler 171, der Umklappwert 172 und der Überlaufwert 173 können beispielsweise als Speicherregister des Mikrocontrollers ausgeführt sein. Der Pulsweitenmodulator 170 erhöht den Wert des Zählers 171 mit jeder Taktperiode des konstanten Zählertakts 111 um die Zahl 1. Falls der Wert des Zählers 171 unter dem Umklappwert 172 liegt, gibt der Pulsweitenmodulator 170 ein hohes Spannungsniveau als Spannungssollwert 106 aus. Falls der Wert des Zählers 171 grösser oder gleich dem Umklappwert 172 ist, gibt der Pulsweitenmodulator 170 ein niedriges Spannungsniveau als Spannungssollwert 106 aus. Falls der Wert des Zählers 171 kleiner als der Überlaufwert 173 ist, wartet der Pulsweitenmodulator 170 anschliessend auf die nächste Taktperiode des konstanten Zählertakts 111, um das beschriebene Verfahren dann ab der Erhöhung des Zählers 171 zu wiederholen.

Falls der Wert des Zählers 171 gleich dem Überlaufwert 173 ist, wird der Wert des Zählers 171 auf einen Startwert, beispielsweise den Wert 0, zurückgesetzt. Außerdem werden der Umklappwert 172 und der Überlaufwert 173 für die nachfolgende Taktperiode des pulsweitenmodulierten Spannungssollwerts mit rauschmodulierter Trägerfrequenz 106 moduliert. Der Überlaufwert 173 bestimmt die Periodenlänge der Trägerfrequenz des pulsweitenmodulierten Spannungssollwerts mit rauschmodulierter Trägerfrequenz 106. Das Verhältnis von Umklappwert 172 zu Überlaufwert 173 gibt das Tastverhältnis des pulsweitenmodulierten Spannungssollwerts mit rauschmodulierter Trägerfrequenz 106 an, und soll zwischen den einzelnen Taktperioden der Trägerfrequenz des pulsweitenmodulierten Spannungssollwerts 106 mit rauschmodulierter Trägerfrequenz möglichst wenig variieren. Dazu wird die digitale Pseudozufallszahl 161 zum Umklappwert 172 und dem Überlaufwert 173 addiert. Dies hat den Vorteil, dass die Durchführung einer Addition durch den Pulsweitenmodulator 170 weniger rechenaufwendig als die Durchführung einer Multiplikation ist. Falls der Wert der digitalen Pseudozufallszahl 161 klein gegen den Umklappwert 172 ist, so ist die sich ergebende Variation des Tastverhältnisses des pulsweitenmodulierten Spannungssollwerts 106 mit rauschmödulierter Trägerfrequenz vernachlässigbar klein und wird im zeitlichen Verlauf herausgemittelt. In einer besonders bevorzugten Ausführungsform weist der Pulsweitenmodulator 170 ein weiteres Register zur Speicherung eines unveränderlichen Umklappwerts, sowie ein weiteres Register zur Speicherung eines unveränderlichen Überlaufwerts auf. Die Berechnung des neuen Umklappwerts 172 sowie die Berechnung des neuen Überlaufwerts 173 in jeder neuen Periode der Trägerfrequenz des pulsweitenmodulierten Spannungssollwerts mit rauschmodulierter Trägerfrequenz 106 erfolgt aus den in den zusätzlichen Registern abgelegten unveränderlichen Umklapp- und Überlaufwerten. Auf diese Weise wird verhindert, dass der Überlaufwert 173 und der Umklappwert 172 sich im zeitlichen Verlauf zu weit von ihren Ausgangswerten entfernen.

Eine in das Elektrowerkzeug 100 integrierte Spannungsquelle 101 gibt eine konstante Spannung 102 ab. Ein Leistungsschalter 103 erzeugt aus der konstanten Spannung 102 und dem pulsweitenmodulierten Spannungssollwert mit rauschmodulierter Trägerfrequenz 106 eine pulsweitenmodulierte Spannung mit rauschmodulierter Trägerfrequenz 104, die einen Motor 105 des Elektrowerkzeugs 100 antreibt.

## Patentansprüche

1. Handgeführtes Elektrowerkzeug (100) mit einem Motor (105) und einem Pulsweitenmodulator (154, 170) zur Erzeugung eines pulsweitenmodulierten Signals (104) zum Betreiben des Motors (105), wobei eine Einrichtung zur Reduzierung der durch das Elektrowerkzeug (100) abgestrahlten EMV-Störungen vorgesehen ist, die eine Einrichtung zum Modulieren der Trägerfrequenz des pulsweitenmodulierten Signals (104) mit einem Rausch- oder Pseudozufallssignal aufweist, wobei ein Taktgenerator (110) zur Erzeugung eines Taktsignals (111) vorgesehen ist, und das pulsweitenmodulierte Signal aus dem Taktsignal (111) abgeleitet wird, wobei ein Zählerregister (171) zur Zählung der abgelaufenen Taktperioden des Taktsignals (111), ein Umklappwertregister (172), und ein Überlaufwertregister (173) vorgesehen sind, und wobei der Pulsweitenmodulator (170) vorgesehen ist,
- ein erstes Signalniveau auszugeben, falls der Wert des Zählerregisters (171) unter dem Umklappwert (172) liegt,
- ein zweites Signalniveau auszugeben, falls der Wert des Zählers (171) gleich oder größer dem Umklappwert (172) ist,
- den Zähler (171) auf einen Startwert zu setzen, falls der Wert des Zählers (171) gleich dem Überlaufwert (173) ist,
- Umklappwert (172) und Überlaufwert (173) auf zufällige neue Werte zu setzen, falls der Wert des Zählers (171) gleich dem bisherigen Überlaufwert (173) ist, wobei das Verhältnis des neuen Umklappwerts zum neuen Überlaufwert im Wesentlichen gleich dem Verhältnis des bisherigen Umklappwerts zum bisherigen Überlaufwert ist,
**dadurch gekennzeichnet, dass** eine Einrichtung vorgesehen ist, um die zufälligen neuen Werte für Umklappwert (172) und Überlaufwert (173) durch Addition einer Zufallszahl zu fest vorgegebenen Werten zu ermitteln.

## Claims

1. Handheld electric tool (100) having a motor (105) and a pulse-width modulator (154, 170) for generating a pulse-width-modulated signal (104) for operating the motor (105), with a device being provided in order to reduce the EMC interference emitted by the electric tool (100), the said device having a device for modulating the carrier frequency of the pulse-width-modulated signal (104) with a noise signal or pseudorandom signal, with a clock generator (110) being provided for generating a clock signal (111), and the pulse-width-modulated signal being derived from the clock signal (111), with a counter register (171) being provided for counting the clock periods of the clock signal (111) which have elapsed, and a flip-over value register (172) and an overflow value register (173) are provided, and with the pulse-width modulator (170) being provided
- to output a first signal level when the value of the counter register (171) is below the flip-over value (172),
- to output a second signal level when the value of the counter (171) is equal to or greater than the flip-over value (172),
- to set the counter (171) to a start value when the value of the counter (171) is equal to the overflow value (173),
- to set the flip-over value (172) and the overflow value (173) to random new values when the value of the counter (171) is equal to the previous overflow value (173), with the ratio of the new flip-over value to the new overflow value being essentially the same as the ratio of the previous flip-over value to the previous overflow value, **characterized in that** a device is provided in order to determine the random new values for the flip-over value (172) and the overflow value (173) by adding a random number to fixedly predetermined values.

## Revendications

1. Outil électrique manuel (100) doté d'un moteur (105) et d'un modulateur (154, 170) de largeur d'impulsions qui forme un signal (104) en impulsions modulées en largeur qui alimente le moteur (105),
un dispositif de réduction des parasites électromagnétiques émis par l'outil électrique (100) étant prévu et présentant un dispositif de modulation de la fréquence porteuse du signal (104) en impulsions modulées en largeur par un signal de bruit ou pseudoaléatoire, un générateur d'horloge (110) qui forme un signal d'horloge (111) étant prévu et le signal en impulsions modulées en largeur étant dérivé du signal d'horloge (111), un registre de comptage (171) qui compte les périodes d'horloge du signal d'horloge (111), un registre (172) d'inversion de valeurs et un registre (173) de débordement de valeurs étant prévus, et le modulateur (170) de largeur d'impulsions étant prévu pour :
- délivrer un premier niveau de signal dans le cas où la valeur du registre de comptage (171) est située en dessous de la valeur d'inversion (172),
- délivrer un deuxième niveau de signal dans le cas où la valeur (171) est égale ou supérieure à la valeur d'inversion (172),
- placer le compteur (171) à une valeur initiale dans le cas où la valeur du compteur (171) est identique à la valeur de débordement (173) et
- fixer la valeur d'inversion (172) et la valeur de débordement (173) à de nouvelles valeurs aléatoires dans le cas où la valeur du compteur (171) est identique à la valeur précédente de débordement (173),
le rapport entre la nouvelle valeur d'inversion et la nouvelle valeur de débordement étant essentiellement égal au rapport entre la valeur d'inversion précédente et la valeur de débordement précédente, **caractérisé en ce qu'**il présente un dispositif qui détermine les nouvelles valeurs aléatoires de la valeur d'inversion (172) et de la valeur de débordement (173) en ajoutant un nombre aléatoire à des valeurs fixes prédéterminées.
